(19) Europäisches Patentamt European Patent Office Office européen des brevets

(11) **EP 4 778 750 A1**

(12) **EUROPEAN PATENT APPLICATION**
published in accordance with Art. 153(4) EPC

(43) Date of publication:
**22.07.2026 Bulletin 2026/30**

(51) International Patent Classification (IPC):
**B60J 1/02** (2006.01)      **B32B 17/10** (2006.01)
**C03C 27/12** (2006.01)

(21) Application number: **24881670.4**

(22) Date of filing: **24.10.2024**

(86) International application number:
**PCT/CN2024/126918**

(87) International publication number:
**WO 2025/087306 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.10.2023 CN 202311379454**

(71) Applicant: **Fuyao Glass Industry Group Co., Ltd.
Fuqing, Fujian 350300 (CN)**

(72) Inventors:
• CHEN, An
  Fujian 350300 (CN)
• LI, Weijun
  Fujian 350300 (CN)
• GUO, Yong
  Fujian 350300 (CN)
• ZHANG, Canzhong
  Fujian 350300 (CN)

(74) Representative: **Patentanwälte Olbricht Buchhold
Keulertz
Partnerschaft mbB
Neue Mainzer Straße 75
60311 Frankfurt am Main (DE)**

(54) **WINDSHIELD AND MANUFACTURING METHOD THEREFOR, AND VEHICLE**

(57)    Disclosed are a windshield and a manufacturing method therefor, and a vehicle. The windshield is mounted on a vehicle including an instrument panel. The windshield includes an outer glass pane, an interlayer, and an inner glass pane. The windshield has a first weakened zone, which is tested with an adult headform impactor, where the adult headform impactor impacts the first weakened zone to fracture it, and impacts the instrument panel thereafter. The adult headform impactor exhibits a first head injury criterion HIC1 during an interval from 0 to 5 ms after impacting the first weakened zone, where 100≤HIC1≤650, and exhibits a second head injury criterion HIC2 during an interval from 5 to 15 ms after impacting the first weakened zone, where HIC2 < 1000. The present disclosure can provide both collision protection for pedestrians and safety protection for occupants in the vehicle, and achieve better comprehensive safety performance.

FIG. 7

**Description**

RELATED APPLICATION

The present disclosure claims priority to Chinese Patent Application No. 202311379454.X filed on October 24, 2023, which is hereby incorporated by reference in its entirety.

TECHNICAL FIELD

The present disclosure relates to the technical field of vehicle glass, and particularly provides a windshield and a manufacturing method therefor, and a vehicle.

BACKGROUND

Conventional automotive safety design has focused primarily on protecting a driver and vehicle occupants. However, with the advancement of automotive safety concepts and the development of automotive safety technologies, countries such as China, the United States and European nations have proposed the concept of pedestrian protection and established corresponding pedestrian protection standards, laws and regulations.

In the event of a head-on collision between a pedestrian and a vehicle, the pedestrian is likely to strike the vehicle's hood, with the pedestrian's head striking the windshield of the vehicle. In such cases, the pedestrian's lower limbs (calves and thighs) are typically the first to sustain injury, followed by the head as it drops after the leg impact, which may result in severe or even fatal injuries. Particularly, if the pedestrian's head penetrates the windshield and collides with other objects such as an instrument panel-where a large number of rigid plastic and metal structures are typically present due to the installation of safety airbags, head-up display projectors and other such devices-the pedestrian's head may sustain more severe secondary injuries. Windshields in the prior art can only adequately protect drivers and vehicle occupants, and fail to provide effective protection for pedestrians colliding with the vehicle.

SUMMARY

In view of the defects in the prior art, the present disclosure provides a windshield, a manufacturing method therefor, and a vehicle. The windshield can reduce a primary injury to a pedestrian's head caused by the windshield when the pedestrian collides with the vehicle and a secondary injury to the pedestrian's head caused by an instrument panel, thus achieving better comprehensive safety performance.

A specific technical solution of the embodiments of the present disclosure is as follows: a windshield is provided and mounted on a vehicle including an instrument panel. The windshield includes an outer glass pane, an interlayer, and an inner glass pane. The outer glass pane includes a first surface and a second surface opposite to each other. The inner glass pane includes a third surface and a fourth surface opposite to each other. The interlayer is connected between the second surface and the third surface.

The windshield has a first weakened zone, which is tested using an adult headform impactor, where the adult headform impactor impacts the first weakened zone to fracture it, and impacts the instrument panel thereafter.

The adult headform impactor exhibits a first head injury criterion (HIC1) during an interval from 0 to 5 ms after impacting the first weakened zone, where $100 \leq HIC1 \leq 650$.

The adult headform impactor exhibits a second head injury criterion (HIC2) during an interval from 5 to 15 ms after impacting the first weakened zone, where $HIC2 < 1000$.

In an exemplary embodiment, the adult headform impactor has a first maximum resultant acceleration (a5) during the interval from 0 to 5 ms after impacting the first weakened zone, and has a second maximum resultant acceleration (a15) during the interval from 5 to 15 ms after impacting the first weakened zone, where a5 is greater than a15.

In an exemplary embodiment, a5 is less than or equal to 180 g, and a15 is less than or equal to 100 g.

In an exemplary embodiment, a duration during which a resultant acceleration (a) of the adult headform impactor is continuously greater than 50 g during an interval from 0 to 15 ms after impacting the first weakened zone is less than or equal to 3 ms.

In an exemplary embodiment, $HIC2 \leq 650$. and HIC2 is less than HIC1.

In an exemplary embodiment, $200 \leq HIC1 \leq 500$, and $HIC2 \leq 500$.

In an exemplary embodiment, the windshield further includes a second weakened zone, which is tested using the adult headform impactor, and the adult headform impactor exhibits a third head injury criterion (HIC3) during an interval from 0 to 15 ms after impacting the second weakened zone, where $HIC3 < 1000$.

In an exemplary embodiment, $100 \leq HIC3 \leq 900$.

In an exemplary embodiment, HIC3 is greater than HIC1, and $200 \leq HIC3 \leq 800$.

In an exemplary embodiment, the windshield further includes a transparent zone and a shielding zone disposed around the transparent zone. The transparent zone has a visible light transmittance of greater than or equal to 70%, and the shielding zone has a visible light transmittance of less than or equal to 10%. Both the first weakened zone and the second weakened zone are located in the transparent zone.

In an exemplary embodiment, the shielding zone includes a top shielding zone, a left shielding zone, a bottom shielding zone and a right shielding zone. A distance between a lower boundary of the first weakened zone and the bottom shielding zone is x, where x is less than or equal to 15 mm. A distance between a left boundary of the first weakened zone and the left shielding zone is m, where m is less than or equal to 50 mm. A distance between a right boundary of the first weakened zone and the right shielding zone is n, where n is less than or equal to 50 mm. A distance between an upper boundary and the lower boundary of the first weakened zone is h, where h is 100 mm to 300 mm. A distance between an upper boundary of the second weakened zone and the top shielding zone is y, where y is less than or equal to 100 mm. A distance between a left boundary of the second weakened zone and the left shielding zone is equal to m. A distance between a right boundary of the second weakened zone and the right shielding zone is equal to n.

In an exemplary embodiment, a transition weakened zone is provided between a lower boundary of the second weakened zone and an upper boundary of the first weakened zone. An area of the transition weakened zone is smaller than that of the first weakened zone. The transition weakened zone is tested using the adult headform impactor, which exhibits a fourth head injury criterion (HIC4) during the interval from 0 to 15 ms after impacting the transition weakened zone, where HIC4 is greater than HIC1 and less than HIC3.

In an exemplary embodiment, a ratio of an area of the first weakened zone to an area of the transparent zone is less than or equal to 1/3, a ratio of an area of the second weakened zone to an area of the transparent zone is less than or equal to 2/3, and the area of the first weakened zone is smaller than the area of the second weakened zone.

In an exemplary embodiment, a duration required for the first weakened zone to fracture upon impact by the adult headform impactor is less than or equal to 3 ms.

In an exemplary embodiment, a flexural strength of the third surface is greater than that of the second surface, and/or a flexural strength of the fourth surface is greater than that of the second surface.

In an exemplary embodiment, a thickness of the interlayer located in the first weakened zone is 0.38 mm to 0.6 mm.

In an exemplary embodiment, the interlayer has a moisture content of 0.3% to 0.4% or 0.6% to 0.7%.

In an exemplary embodiment, a concentration of tin oxide of the second surface is greater than that of the first surface, and a concentration of tin oxide of the third surface is greater than that of the fourth surface. Alternatively, the concentration of tin oxide of the second surface is less than that of the first surface, and the concentration of tin oxide of the third surface is less than that of the fourth surface.

In an exemplary embodiment, a ratio of a thickness of the outer glass pane to a thickness of the inner glass pane is greater than or equal to 0.75 and less than 1.

In an exemplary embodiment, a weakening coating is disposed on at least one selected from the group consisting of the second surface, the third surface and the fourth surface, and the weakening coating covers at least the first weakened zone.

The present disclosure further provides a vehicle, including an instrument panel and any of the aforementioned windshields, and the instrument panel is disposed at a position close to a lower side of the windshield.

The present disclosure further provides a method for manufacturing a windshield, including:

Step 1: providing a curved outer glass pane and a curved inner glass pane, where the outer glass pane has a first surface and a second surface opposite to each other, and the inner glass pane has a third surface and a fourth surface opposite to each other;

Step 2: providing an interlayer, and laminating the outer glass pane, the interlayer and the inner glass pane in sequence to form a laminated glass structure; and

Step 3: heating, evacuating and/or pressurizing the laminated glass structure to obtain the windshield which is provided with the first weakened zone.

In an exemplary embodiment, the windshield has at least one weakening structure which is located at least in the first weakened zone, and the weakening structure is formed by at least one of the following weakening methods:

(i) introducing internal defects between the first surface and the second surface using a laser weakening method;
(ii) introducing internal defects between the third surface and the fourth surface using a laser weakening method;
(iii) forming micro-cracks on the second surface using a physical friction weakening method; or
(iv) forming fracture patterns on the second surface using a chemical etching weakening method.

In an exemplary embodiment, the curved outer glass pane and the curved inner glass pane are obtained by subjecting flat glass to a heating and softening step, a bending and shaping step and an annealing step, which satisfy at least one of the following conditions:

(i) the heating and softening step adopts a heating temperature of 660 °C to 750 °C;
(ii) the heating and softening step adopts a convection heating method to soften the flat glass;
(iii) the heating and softening step adopts a convection heating method and a radiation heating method to soften the flat glass;
(iv) in the heating and softening step, a surface of the flat glass with a lower concentration of tin oxide faces a heating element;
(v) in the heating and softening step, a heating and softening time for the outer glass pane is longer than that for the inner glass pane;
(vi) in the bending and shaping step, a temperature of a bending mold for bending and shaping the flat glass is greater than or equal to 500 °C;
(vii) in the annealing step, an air blowing pressure for the outer glass pane is lower than that for the inner glass pane; and
(viii) in the annealing step, an annealing time for the outer glass pane is longer than that of the inner glass pane.

In an exemplary embodiment, before the laminated glass structure is formed, the interlayer is subjected to a humidity conditioning treatment or a stretching treatment. The interlayer that has subjected to the humidity conditioning treatment has a moisture content of 0.3% to 0.4% or 0.6% to 0.7%, and the interlayer that has subjected to the stretching treatment has a thickness of 0.38 mm to 0.6 mm in the first weakened zone.

The technical solutions of the present disclosure achieve the following remarkable advantageous effects.

By being provided with the first weakened zone in the transparent zone, the windshield of the present disclosure can reduce the primary injury to the pedestrian's head caused by the windshield and the secondary injury to the pedestrian's head caused by the instrument panel in the event of a collision between the pedestrian and the vehicle, thus significantly reducing the total injury sustained by the pedestrian's head. As a result, the present disclosure can offer both pedestrian impact protection and occupant safety protection, thus improving the comprehensive safety performance of the windshield.

## BRIEF DESCRIPTION OF THE DRAWINGS

The drawings described here are for illustrative purposes only and are not intended to limit the scope of the present disclosure in any manner. In addition, the shapes, proportional dimensions, etc. of various components in the drawings are merely schematic, serving to facilitate the understanding of the present disclosure, rather than specifically limiting the shapes and proportional dimensions of the various components of the present disclosure. Those skilled in the art may, under the teachings of the present disclosure, select various possible shapes and proportional dimensions to practice the present disclosure according to specific circumstances.

FIG. 1 illustrates a schematic structural diagram of a vehicle according to the present disclosure;
FIG. 2 illustrates a schematic cross-sectional structural diagram of a windshield according to the present disclosure;
FIG. 3 illustrates impact curves showing impact time versus resultant acceleration, obtained by testing a conventional windshield in accordance with standard GB 24550;
FIG. 4 illustrates a front-view schematic structural diagram of a windshield according to the present disclosure;
FIG. 5 illustrates impact curves showing impact time versus resultant acceleration, obtained by testing a windshield of the present disclosure in accordance with standard GB 24550;
FIG. 6 illustrates a front-view schematic structural diagram of a windshield provided with a transition weakened zone according to the present disclosure; and
FIG. 7 illustrates a schematic cross-sectional structural diagram of a windshield provided with a weakening coating according to the present disclosure.

Reference numerals:

100: instrument panel; 200: windshield; 201: transparent zone; 202: shielding zone;
205: top shielding zone; 206: left shielding zone; 207: right shielding zone;
208: bottom shielding zone; 1: outer glass pane; 11: first surface; 12: second surface;
2: interlayer; 3: inner glass pane; 31: third surface; 32: fourth surface; 4: dark printed layer;
203: first weakened zone; 204: second weakened zone; 300: head-up display projector;
400: front passenger airbag; 5: weakening coating.

DETAILED DESCRIPTION OF THE EMBODIMENTS

The technical solutions of the present disclosure will be described in detail below with reference to the drawings and specific embodiments. It should be understood that these embodiments are provided for illustration purposes only and are not intended to limit the scope of the present disclosure. After reading this disclosure, various equivalent modifications made by those skilled in the art fall within the scope defined by the appended claims.

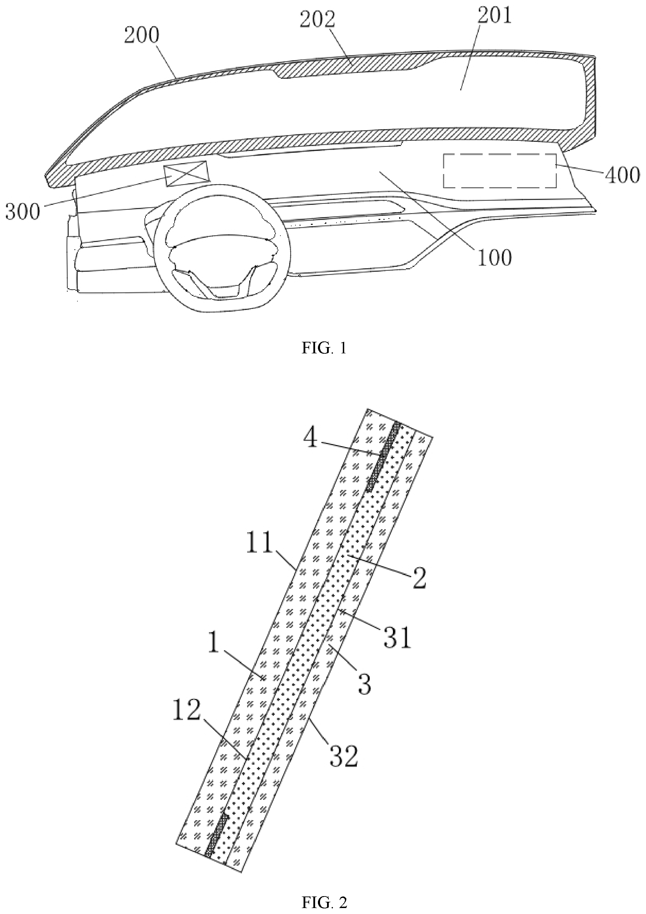

As illustrated in FIG. 1, the present disclosure provides a vehicle, which includes an instrument panel 100 and a windshield 200, with the instrument panel 100 disposed at a position adjacent to the lower side of the windshield 200. The vehicle of the present disclosure may be, but is not limited to, a sedan, a truck, a pickup truck, a commercial vehicle, a bus and an off-road vehicle, and the present disclosure imposes no limitation thereto. The windshield 200 is arranged at an angle relative to the instrument panel 100, and the angle is substantially equal to the installation angle of the windshield 200. The installation angle of the windshield 200 refers to an angle between the windshield 200 and the horizontal plane when the windshield 200 is in an installed state, indicating the inclination degree of the windshield 200. The installation angle typically ranges from 18° to 45°, such as 25°, 30°, 35°, 40°, etc.

In some embodiments, a head-up display projector 300 is mounted inside the instrument panel 100. The head-up display projector 300 is capable of projecting information to be displayed onto the windshield 200. Light projected by the head-up display projector 300 enters the driver's eyes after being reflected or diffracted by the windshield 200, so that the driver can view the required driving information, road condition information, and even entertainment information without looking down. In some other embodiments, a front passenger airbag 400 is mounted inside the instrument panel 100, and is capable of deploying from the instrument panel 100 instantaneously upon a collision to protect the safety of occupants in the vehicle.

The windshield 200 has a transparent zone 201 and a shielding zone 202 disposed around the transparent zone 201. The transparent zone 201 is located in a central area of the windshield 200, and has a relatively high visible light transmittance in compliance with safety standards, with a visible light transmittance greater than or equal to 70%. The shielding zone 202 is disposed around the peripheral edge area of the windshield 200, and has a relatively low visible light transmittance of less than or equal to 10%. The shielding zone 202 serves to shield and protect internal components of the vehicle, thereby preventing these components from aging and damage caused by direct sunlight to extend their service life. Meanwhile, the shielding zone 202 can also conceal the internal components of the vehicle to ensure overall aesthetic appearance when viewed from the outside. Exemplarily, the visible light transmittance of the shielding zone 202 is less than or equal to 5%; more exemplarily, it is less than or equal to 1%; further exemplarily, it is less than or equal to 0.5%; or even, it is substantially equal to 0, meaning it is opaque.

The shielding zone 202 may be formed from at least one of a dark printed layer, a dark polymer film or a light-modulating element. The dark printed layer may be made of ceramic ink or ultraviolet ink via a process such as screen printing or inkjet printing; exemplarily, the dark printed layer is black, brown, sepia or the like. The dark polymer film may be a mass-colored polymer film, which is made of a thermoplastic resin such as polyvinyl butyral (PVB), polyethylene terephthalate (PET), polyvinyl chloride (PVC), ethylene-vinyl acetate copolymer (EVA), thermoplastic polyurethane (TPU), polyolefin elastomer (POE), polyurethane (PU) or ionomer film (SGP); exemplarily, the thermoplastic resin is PET or PVB. For example, mass coloration is achieved by adding colorants during the manufacture of the polymer film, thereby yielding black, brown or other colored polymer films. The dark polymer film may also be a pigment-printed polymer film, for example, by printing black or brown pigments or paints onto the surface of the polymer film. The light-modulating element may be a polymer-dispersed liquid crystal film (PDLC), a suspended particle device film (SPD), an electrochromic film (EC), a dye liquid crystal film (LC) or the like. The minimum visible light transmittance of the light-modulating element is less than or equal to 5%, for example, 3%, 2%, 1%, 0.5% or 0%. The maximum visible light transmittance of the light-modulating element is set as required, for example, 10%, 20%, 30%, 50%, 70%, 80%, etc. Specifically, for example, the visible light transmittance of the light-modulating element may be adjusted between 0% and 20%, or between 0.5% and 50%, or between 0% and 70%, etc., so as to meet the requirements on the visible light transmittance in various scenarios.

As illustrated in FIG. 2, the windshield 200 of the present disclosure adopts a laminated glass structure, which specifically includes an outer glass pane 1, an interlayer 2 and an inner glass pane 3. The outer glass pane 1 has a first surface 11 and a second surface 12 opposite to each other. The inner glass pane 3 has a third surface 31 and a fourth surface 32 opposite to each other. The interlayer 2 is connected between the second surface 12 and the third surface 31. The outer glass pane 1, the interlayer 2 and the inner glass pane 3 undergo automotive glass production process to form the windshield 200 with the laminated glass structure, which can meet the application requirements of Chinese standard GB 9656 as well as automotive glass standards of European, the United States and other countries.

When the windshield 200 is mounted on a vehicle, the outer glass pane 1 is located on an outer side of the vehicle, with the first surface 11 being an outer surface of the windshield 200 exposed outside the vehicle. The inner glass pane 3 is located on an inner side of the vehicle, with the fourth surface 32 being an inner surface of the windshield 200 exposed inside the vehicle. When a pedestrian collides with the windshield 200, the pedestrian's head first contacts the first surface 11 of the outer glass pane 1. If the windshield 200 remains unfractured, the pedestrian's head will sustain a severe impact from the windshield 200. If the windshield 200 fractures, the pedestrian's head may partially or completely penetrate through the fourth surface 32 of the inner glass pane 3.

The outer glass pane 1 may be a transparent glass or a tinted glass, with a thickness of 0.7 mm to 4 mm and a visible light transmittance of greater than 70%. The inner glass pane 3 may be a clear glass or a tinted glass, with a thickness of 0.7 mm to 4 mm and a visible light transmittance of greater than 70%. The total iron content (calculated as $Fe_2O_3$) of the clear glass is less than or equal to 0.1%, even less than or equal to 0.05%, and further less than or equal to 0.01%, with its visible light transmittance ranging from 80% to 95%. The total iron content (calculated as $Fe_2O_3$) of the tinted glass is 0.1% to 0.8%, even from 0.1% to 0.5%, with its visible light transmittance ranging from 75% to 90%. For example, the outer glass pane 1 may be a clear glass with a thickness of 2.1 mm and a visible light transmittance of 89%, and the inner glass pane 3 may be a green glass with a thickness of 1.6 mm and a visible light transmittance of 83%, or a green glass with a thickness of 2.1 mm and a visible light transmittance of 80%.

The interlayer 2 is a transparent or tinted thermoplastic polymer film, with a thickness of 0.38 mm to 2.28 mm. As an example, the thickness of the interlayer 2 may be, but is not limited to, 0.38 mm, 0.76 mm, 1.14 mm, 1.52 mm, 1.9 mm, 2.28 mm, or any other value between 0.38 mm and 2.28 mm. The material of the thermoplastic polymer film may be at least one selected from the group consisting of polyvinyl butyral (PVB), polyurethane (PU), ethylene-vinyl acetate copolymer (EVA), and ionomer (i.e., ionomer film, SGP). When the interlayer 2 is a transparent thermoplastic polymer film, its visible light transmittance is greater than or equal to 80%, such as 80%, 85%, 90%, 95%, etc. When the interlayer 2 is a tinted thermoplastic polymer film, its visible light transmittance is greater than 70%, such as 75%, 80%, 85%, 90%, etc. The tinted thermoplastic polymer film may be a grey, green or blue thermoplastic polymer film.

In FIG. 2, the shielding zone 202 may be formed by a dark printed layer 4 applied onto the second surface 12 via screen printing, inkjet printing, or similar processes using ceramic ink or UV ink, followed by curing or high-temperature sintering. The dark printed layer 4 is disposed around the peripheral edge area of the second surface 12. It should be understood that the dark printed layer 4 may also be disposed only on the third surface 31, only on the fourth surface 32, on both the second surface 12 and the fourth surface 32, on both the second surface 12 and the third surface 31, on both the third surface 31 and the fourth surface 32, or on all three surfaces: the second surface 12, the third surface 31 and the fourth surface 32.

Regarding the safety application requirements for the windshield 200, it shall meet the basic conventional requirements for the safety protection of vehicle occupants, i.e., to prevent vehicle occupants from penetrating out of the vehicle during a collision, and resist fracture upon collision with flying debris such as gravel from outside the vehicle, thus achieving impact resistance against such flying debris. These safety application requirements are mandatory for all conventional windshields. However, an increasing number of countries mandate that the windshield 200 shall also protect a pedestrian colliding with the vehicle, minimizing injury to the pedestrian's head caused by the windshield during a collision. In accordance with Chinese standard GB 24550, the head injury criterion (HIC) is used to evaluate the degree of injury to the pedestrian's head caused by the windshield during a collision. The head injury criterion (HIC) is calculated in accordance with the following formula:

$$HIC = (t_2 - t_1)\left[\frac{1}{t_2 - t_1}\int_{t_1}^{t_2} adt\right]^{2.5}$$

where a is a measured resultant acceleration in g (1 g = 9.81 m/s$^2$);
$t_1$ and $t_2$ are two time instants (in seconds) during the impact, representing a time interval between the start and end of recording, within which the HIC reaches its maximum value ($t_2$-$t_1 \leq$15 ms).

According to the applicant's research, after a pedestrian's head collides with the windshield 200, if the windshield 200 does not fracture, the HIC of the windshield 200 is inevitably greater than 1000, or even greater than 1700. In such a case, the pedestrian's head will sustain a huge impact from the windshield 200, resulting in a severe primary injury to the pedestrian's head. If the windshield 200 fractures, the HIC of the windshield 200 may be either greater than or less than 1000. To better protect the pedestrian's head, the windshield 200 of the present disclosure has an HIC of less than 1000, thereby minimizing the primary injury to the pedestrian's head.

According to further research by the applicant, the applicant has surprisingly found that if a windshield 200 with an HIC of less than 1000 is provided, the windshield 200 will facture upon the collision of a pedestrian's head with the windshield 200, and the pedestrian's head will partially or even completely penetrate through the fourth surface 32 of the inner glass pane 3. Due to the vehicle's structural design and the collision angle between the pedestrian and the vehicle, the pedestrian's head usually directly strikes the lower portion of the windshield 200, or even an area close to the bottom edge of the windshield 200. After penetrating or passing through the fourth surface 32, the pedestrian's head will further strike the instrument panel 100 below the windshield 200, and the instrument panel 100 will cause secondary injury to the pedestrian's head. In particular, when the head-up display projector 300, the front passenger airbag 400 or any other hard and sharp decorative component is installed in the instrument panel 100, the secondary injury caused by the instrument panel 100 may be more severe than the primary injury caused by the windshield 200.

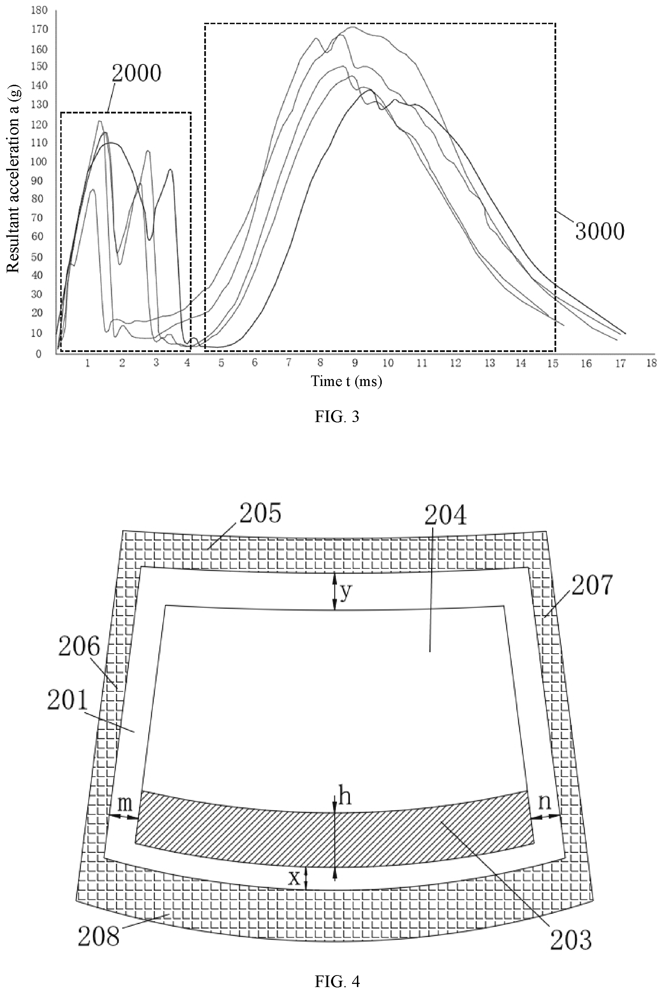

As illustrated in FIG. 3, a plurality of conventional windshields 200 are tested with an adult headform impactor in accordance with the Chinese standard GB 24550 to simulate the process of a pedestrian's head striking the windshield 200 during a pedestrian-vehicle collision, and impact curves showing impact time versus resultant acceleration are obtained using an acceleration sensor and a data acquisition instrument. FIG. 3 illustrates five sets of impact curves, where the abscissa represents impact time t (Time) in milliseconds (ms) and the ordinate represents a resultant acceleration a (Acceleration) in g. In the present disclosure, the adult headform impactor decelerates due to resistance after sequentially impacting the windshield 200 and the instrument panel 100. For the convenience of plotting and explanation, the absolute value of the resultant acceleration a is taken.

In FIG. 3, the dashed box 2000 denotes impact curves of impact time versus resultant acceleration after the adult headform impactor impacts the windshield 200, spanning from the moment the adult headform impactor first contacts the first surface 11 of the windshield 200 to the moment the windshield 200 fractures-a process typically completed within 5 ms. The dashed box 3000 denotes impact curves of impact time versus resultant acceleration within 15 ms from the moment the windshield 200 fractures to the moment the impactor impacts the instrument panel 100. Based on the curves within the dashed boxes 2000 and 3000 and the calculation formula for the head injury criterion (HIC), two HIC values can be calculated respectively. For the five impact curves of the conventional windshield 200 shown in FIG. 3, the resultant acceleration within the dashed box 3000 is significantly greater than that within the dashed box 2000, and the HIC calculated from the curves within the dashed box 3000 is also markedly greater than that calculated from the curves within the dashed box 2000. The HIC calculated from the curves within the dashed box 3000 even exceeds 1000. This indicates that the instrument panel 100 causes more severe secondary injury to the pedestrian's head, and may even fail to meet the standard requirement of HIC being less than 1000.

On this basis, the present disclosure further optimizes the windshield 200 with an HIC less than 1000. As illustrated in FIG. 4, a first weakened zone 203 is disposed on the windshield 200 at an area corresponding to the instrument panel 100. Tests are conducted on the first weakened zone 203 using an adult headform impactor, where the impactor impacts the first weakened zone 203 to fracture it, and impacts the instrument panel 100 thereafter. The adult headform impactor exhibits a first head injury criterion (HIC1) during an interval from 0 to 5 ms after impacting the first weakened zone 203, and a second head injury criterion (HIC2) during an interval from 5 to 15 ms after impacting the first weakened zone 203, where HIC1 and HIC2 satisfy the requirements of $100 \leq HIC1 \leq 650$ and $HIC2 < 1000$. By disposing the first weakened zone 203 on the windshield 200, the present disclosure not only meets the basic requirement of protecting the safety of vehicle occupants, but also reduces both the primary injury caused by the windshield 200 and the secondary injury caused by the instrument panel 100 to the pedestrian's head. It meets the standard requirement that both HIC1 and HIC2 are less than 1000, thus significantly reducing the total injury sustained by the pedestrian's head. It should be understood that the tests on the first weakened zone 203 using the adult headform impactor may be conducted in accordance with Chinese standard GB24550, European Union regulation ECE UN R127, European New Car Assessment Programme (E-NCAP) protocol, China New Car Assessment Programme (C-NCAP), or China Insurance Automotive Safety Index (C-IASI), etc. In the present disclosure, the tests are exemplarily conducted in accordance with Chinese standard GB24550, and the adult headform impactor used is the one specified in Chinese standard GB24550.

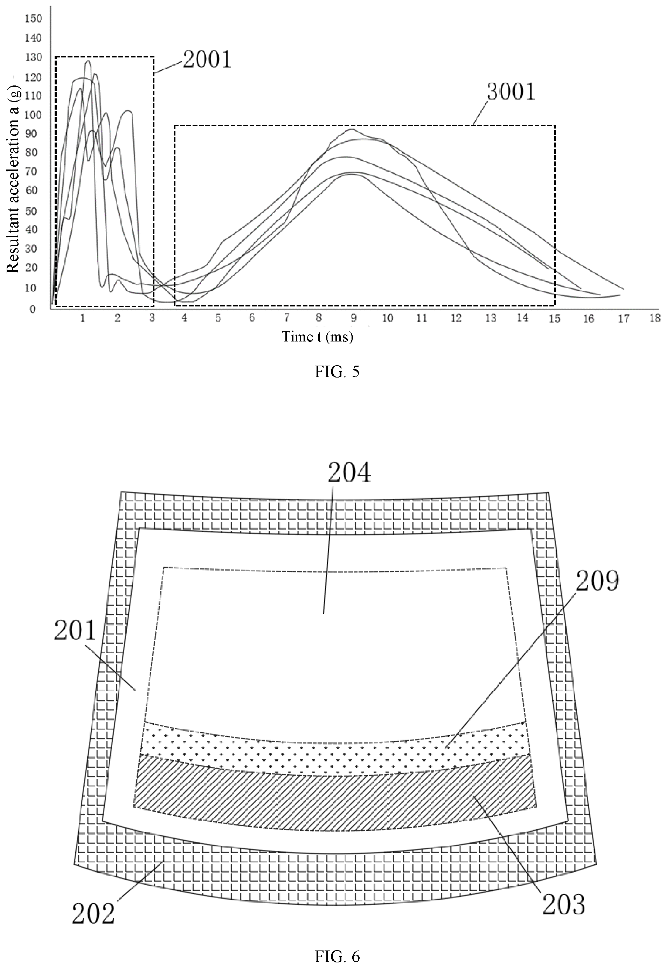

As illustrated in FIG. 5, a plurality of further optimized windshields 200 of the present disclosure are provided and tested with an adult headform impactor in accordance with Chinese standard GB24550 to simulate the process of a pedestrian's head striking the windshield 200 during a pedestrian-vehicle collision, and impact curves showing impact time versus resultant acceleration are obtained using an acceleration sensor and a data acquisition instrument. The dashed box 2001 denotes impact curves of impact time versus resultant acceleration after the adult headform impactor impacts the windshield 200, spanning from the moment the adult headform impactor first contacts the first surface of the windshield 200 to the moment the windshield 200 fractures. The dashed box 3001 denotes impact curves of impact time versus resultant acceleration within 15 ms from the moment the windshield 200 fractures to the moment the impactor impacts the instrument panel 100. The adult headform impactor has a first maximum resultant acceleration a5 during the interval from 0 to 5 ms after impacting the first weakened zone 203, and a second maximum resultant acceleration a15 during the interval from 5 to 15 ms after impacting the first weakened zone 203, where a5 is greater than a15. This is more conducive to reducing the secondary injury inflicted on the pedestrian's head by the instrument panel 100, satisfies the standard requirement that both HIC1 and HIC2 are less than 1000, thus significantly reducing the total injury sustained by the pedestrian's head. The windshield 200 can offer both pedestrian impact protection and occupant safety protection, thus achieving better comprehensive safety performance.

In some embodiments, the fracture time of the windshield 200 after being impacted by the adult headform impactor is shortened to not more than 3 ms. That is, a duration in which the adult headform impactor impacts the first weakened zone 203 to cause it to fracture is less than or equal to 3 ms, which is more conducive to reducing the primary injury inflicted on the pedestrian's head by the windshield 200. During the fracture process of the windshield 200, the outer glass pane 1 exerts a maximum external resultant acceleration a0 on the adult headform impactor, and the inner glass pane 3 exerts a maximum internal resultant acceleration ai on the adult headform impactor. That is, the adult headform impactor exhibits two acceleration peaks during the interval from 0 to 5ms after impacting the first weakened zone 203, which correspond specifically to the two acceleration peaks in the dashed box 2001. Typically, the inner glass pane 3 fractures earlier than the outer glass pane 1, and the maximum external resultant acceleration a0 is greater than the maximum internal resultant acceleration ai. In some other embodiments, the maximum external resultant acceleration a0 is less than the maximum internal resultant acceleration ai. In still other embodiments, the adult headform impactor exhibits only one acceleration peak during the interval from 0 to 5ms after impacting the first weakened zone 203.

In some embodiments, the first maximum resultant acceleration a5 is less than or equal to 180 g, and the second maximum resultant acceleration a15 is less than or equal to 100 g, which is more conducive to reducing the primary injury caused by the windshield 200 and the secondary injury caused by the instrument panel 100 to the pedestrian's head. Exemplarily, the first maximum resultant acceleration a5 is less than or equal to 150 g, and the second maximum resultant acceleration a15 is less than or equal to 80 g.

In some embodiments, a duration in which the resultant acceleration a of the adult headform impactor is continuously greater than 50 g during an interval from 0 to 15 ms after impacting the first weakened zone 203 is less than or equal to 3 ms, which is more conducive to reducing the primary injury inflicted on the pedestrian's head by the windshield 200.

In some embodiments, the second head injury criterion HIC2 is less than or equal to 650, and HIC2 is less than HIC1, which is more conducive to reducing the secondary injury inflicted on the pedestrian's head by the instrument panel 100. According to the applicant's research, it is found that if HIC1 is too small, the adult headform impactor will directly penetrate the windshield 200. Although the primary injury to the pedestrian's head caused by the windshield 200 is relatively minor, the secondary injury to the pedestrian's head caused by the instrument panel 100 is extremely severe under such circumstances, making HIC2 significantly greater than 1000. In addition, it is difficult to meet the impact resistance requirements against flying debris such as gravel outside the vehicle. Therefore, after the adult headform impactor impacts the first weakened zone 203, the optimal state of the first weakened zone 203 is fractured but not completely penetrated. Exemplary values of either of the first head injury criterion HIC1 and the second head injury criterion HIC2 may include 100, 150, 180, 200, 220, 250, 280, 300, 320, 350, 370, 400, 430, 450, 480, 500, 550, 600 and 650. Exemplarily, $200 \leq$ HIC1$\leq$500, and HIC2$\leq$500.

In FIG. 4, the first weakened zone 203 is located in the transparent zone 201. After fracturing the first weakened zone 203, the adult headform impactor will continue to impact the instrument panel 100. Thus, the first weakened zone 203 is also referred to as an instrument panel weakened zone or an IP weakened zone. The shielding zone 202 includes a top shielding zone 205, a left shielding zone 206, a right shielding zone 207 and a bottom shielding zone 208. The top shielding zone 205 is located in a top area of the windshield 200, the left shielding zone 206 is located in a left area of the windshield 200, the right shielding zone 207 is located in a right area of the windshield 200, and the bottom shielding zone 208 is located in a bottom area of the windshield 200. Specifically, a distance between a lower boundary of the first weakened zone 203 and the bottom shielding zone 208 is x, a distance between a left boundary of the first weakened zone 203 and the left shielding zone 206 is m, a distance between a right boundary of the first weakened zone 203 and the right shielding zone 207 is n, and a distance between an upper boundary and the lower boundary of the first weakened zone 203 is h, where x is less than or equal to 15 mm, m is less than or equal to 50 mm, n is less than or equal to 50 mm, and h is 100 mm to 300 mm. Specifically, exemplary values of x may include 15 mm, 10 mm, 5 mm, 1 mm, etc.; exemplary values of m may include 50 mm, 45 mm, 40 mm, 35 mm, 30 mm, 25 mm, 20 mm, 15 mm, 10 mm, 5 mm, etc.; exemplary values of n may include 50 mm, 45 mm, 40 mm, 35 mm, 30 mm, 25 mm, 20 mm, 15 mm, 10 mm, 5 mm, etc.; and exemplary values of h may include 100 mm, 120 mm, 150 mm, 180 mm, 200 mm, 230 mm, 250 mm, 280 mm, 300 mm, etc.

To further reduce the primary injury to the pedestrian's head caused by the windshield 200, the windshield 200 is further provided with a second weakened zone 204, which is also located in the transparent zone 201. Tests are conducted on the second weakened zone 204 using an adult headform impactor in accordance with the standard GB24550. The adult headform impactor exhibits a third head injury criterion HIC3 during the interval from 0 to 15 ms after impacting the second weakened zone 204, where HIC3<1000. Exemplarily, $100 \leq$HIC3$\leq$900, and exemplary values of HIC3 may include 100, 150, 200, 250, 300, 350, 400, 450, 500, 550, 600, 650, 700, 750, 800, 850, 900, etc. In the present disclosure, the first weakened zone 203 is mainly used to protect the pedestrian's head and can reduce both the primary injury caused by the windshield 200 and the secondary injury caused by the instrument panel 100 to the pedestrian's head. The second weakened zone 204 is mainly used to protect occupants in the vehicle while also protecting the pedestrian's head, and can reduce the primary injury to the pedestrian's head caused by the windshield 200. Exemplarily, HIC1 and HIC3 satisfy HIC3 > HIC1 and $200 \leq$HIC3$\leq$800.

As illustrated in FIG. 4, the second weakened zone 204 is located between the first weakened zone 203 and the top shielding zone 205. A distance between an upper boundary of the second weakened zone 204 and the top shielding zone 205 is y, a distance between a left boundary of the second weakened zone 204 and the left shielding zone 206 is m, a distance between a right boundary of the second weakened zone 204 and the right shielding zone 207 is n, where y is less than or equal to 100 mm. Exemplary values of y may include 5 mm, 10 mm, 20 mm, 30 mm, 40 mm, 50 mm, 60 mm, 70 mm, 80 mm, 90 mm, 100 mm, etc.

In some embodiments, the ratio of the area of the first weakened zone 203 to the area of the transparent zone 201 is less than or equal to 1/3, the ratio of the area of the second weakened zone 204 to the area of the transparent zone 201 is less than or equal to 2/3, and the area of the first weakened zone 203 is less than the area of the second weakened zone 204.

In FIG. 4, the first weakened zone 203 is adjacent to the second weakened zone 204. As illustrated in FIG. 6, in some other embodiments, a transition weakened zone 209 may be disposed between a lower boundary of the second weakened zone 204 and an upper boundary of the first weakened zone 203, and the area of the transition weakened zone 209 is less than the area of the first weakened zone 203. Tests are conducted on the transition weakened zone 209 using the adult headform impactor, which exhibits a fourth head injury criterion HIC4 during an interval from 0 to 15 ms after impacting the transition weakened zone 209, where HIC4 is greater than HIC1 and less than HIC3.

In order to form the first weakened zone 203 and the second weakened zone 204 on the windshield 200, the present disclosure achieves zonal HIC control by performing zonal weakening on the windshield. For the first weakened zone 203, the peak value of the second maximum resultant acceleration a15 may be made to occur earlier, and the peak value of a15 may also be reduced, making a15 less than a5, which significantly optimizes the impact curve overall.

When weakening the windshield 200, other safety requirements shall also be satisfied. For example, the front passenger airbag 400 will directly strike the inner glass pane 3 upon deployment. To protect occupants in the vehicle, the strength of the inner glass pane 3 is exemplarily greater than that of the outer glass pane 1. Specifically, a flexural strength of the third surface 31 may be greater than that of the second surface 12, and/or a flexural strength of the fourth surface 32 may be greater than that of the second surface 12.

The thickness of the interlayer 2 of the conventional windshield 200 is typically 0.76 mm to 1.52 mm. To form the first weakened zone 203, the thickness of the interlayer 2 in the first weakened zone 203 in the present disclosure is 0.38 mm to 0.6 mm, with exemplary values including 0.38 mm, 0.5 mm, 0.6 mm, etc. To ensure the overall strength of the second weakened zone 204, the thickness of the interlayer 2 in the second weakened zone 204 is exemplarily at least 0.76 mm.

According to the applicant's research, the moisture content of the interlayer 2 affects the bonding strength between the interlayer 2 and the outer glass pane 1 as well as the inner glass pane 3. The moisture content of the interlayer 2 of the conventional windshield 200 is 0.45% to 0.55%, which can provide better adhesion strength and result in a higher HIC of the windshield 200. To form the first weakened zone 203 and the second weakened zone 204, the moisture content of the interlayer 2 in the present disclosure is 0.3% to 0.4%, with exemplary values including 0.3%, 0.32%, 0.35%, 0.38%, 0.4%, etc.; or 0.6% to 0.7%, with exemplary values including 0.6%, 0.61%, 0.63%, 0.65%, 0.68%, 0.7%, etc.

In the present disclosure, both the outer glass pane 1 and the inner glass pane 3 are made of float glass, which is formed with an air surface and a tin surface during production, where a concentration of tin oxide of the tin surface is greater than that of the air surface. For the conventional windshield 200, one of the second surface 12 and the third surface 31 serves as the air surface and the other serves as the tin surface, so as to enhance the bonding strength between these surfaces and the interlayer 2.

To form the first weakened zone 203 and the second weakened zone 204, the second surface 12 and the third surface 31 in the present disclosure are both tin surfaces or air surfaces. When both the second surface 12 and the third surface 31 are tin surfaces, the concentration of tin oxide of the second surface 12 is greater than that of the first surface 11, and the concentration of tin oxide of the third surface 31 is greater than that of the fourth surface 32. When both the second surface 12 and the third surface 31 are air surfaces, the concentration of tin oxide of the second surface 12 is less than that of the first surface 11, and the concentration of tin oxide of the third surface 31 is less than that of the fourth surface 32.

For the conventional windshield 200, the outer glass pane 1 has a thickness of 2.1 mm and the inner glass pane 3 has a thickness of 2.1 mm, or the outer glass pane 1 has a thickness of 3.0 mm and the inner glass pane 3 has a thickness of 1.1 mm. This configuration causes the conventional windshield 200 to fracture within approximately 5 ms upon impact, or even about 6.5 ms. In the present disclosure, the ratio of the thickness of the outer glass pane 1 to that of the inner glass pane 3 is exemplarily greater than or equal to 0.75 and less than 1, such as 0.75, 0.8, 0.85, 0.9, 0.95, 0.96, 0.97, 0.98, 0.99, etc., which allows the inner glass pane 3 and the outer glass pane 1 to fracture simultaneously or nearly simultaneously and rapidly, thereby reducing the fracture time of the windshield 200 upon impact to not more than 3 ms. Specifically, examples include the outer glass pane 1 having a thickness of 1.6 mm and the inner glass pane 3 having a thickness of 2.1 mm, or the outer glass pane 1 having a thickness of 1.8 mm and the inner glass pane 3 having a thickness of 2.0 mm.

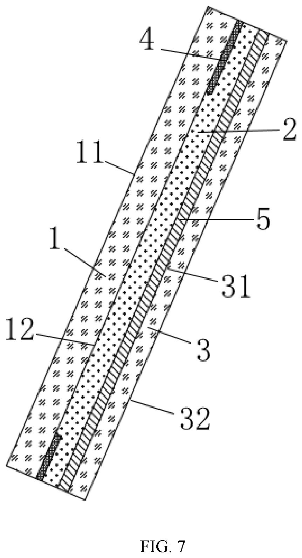

As illustrated in FIG. 7, the present disclosure further provides a weakening coating 5 on at least one selected from the group consisting of the second surface 12, the third surface 31 and the fourth surface 32, where the weakening coating 5 covers at least the first weakened zone 203. Exemplarily, the weakening coating 5 covers at least the first weakened zone 203 and the second weakened zone 204. Further, the weakening coating 5 covers at least the transparent zone 201. During the manufacturing of the windshield 200, the weakening coating 5 undergoes, together with the outer glass pane 1 or the inner glass pane 3, a heating and softening step, a bending and shaping step, and an annealing step. Due to different heating rates and annealing rates between the weakening coating 5 and the outer glass pane 1 or the inner glass pane 3, the glass surface where the weakening coating 5 is located exerts a mechanical stress on the interior of the glass, resulting in an increase in a tensile stress inside the glass and an increase in a compressive stress on the glass surface where the weakening coating 5 is located, thereby reducing the stress on the glass surface without the weakening coating 5, and achieving the effect of $100 \leq HIC1 \leq 650$ and $HIC2 < 1000$.

The weakening coating 5 may be applied to at least one selected from the group consisting of the second surface 12, the third surface 31 and the fourth surface 32 by physical vapor deposition (PVD) or sol-gel methods. The PVD method is exemplarily a magnetron sputtering process. It should be understood that the weakening coating 5 not only serves to weaken the windshield 200, but also imparts its intrinsic functional properties to the windshield 200, such as heat insulation, ultraviolet resistance, electric heating for defrosting and defogging, enhanced P-polarized light reflectivity for HUD implementation, reduced visible light reflectivity, anti-fogging, water repellency, anti-glare, etc.

In some embodiments, the weakening coating 5 may cover at least 30%, 40%, 50%, 60%, 70%, 80%, 90%, or even 100% of the area of the windshield 200.

In some embodiments, the weakening coating 5 includes at least one infrared reflective functional layer, which may be a metal layer, a metal alloy layer or a transparent conductive oxide (TCO) layer. The number of infrared reflective functional layers in the weakening coating 5 may be one, two, three, four or even five, etc. Considering design complexity, production difficulty, and manufacturing cost, etc., the number of infrared reflective functional layers is exemplarily 2 to 4. It can be understood that the weakening coating 5 further includes at least two dielectric layers, with each of the infrared reflective functional layers disposed between two adjacent dielectric layers. On the one hand, the dielectric layer serves to protect the infrared reflective functional layer and prevent it from oxidation or corrosion. On the other hand, the dielectric layer can adjust the optical properties, mechanical properties, and reflective color of the weakening coating 5.

The material of the metal layer may be gold (Au), silver (Ag), copper (Cu), or aluminum (Al). The material of the metal alloy layer may be a silver alloy with a silver content of greater than or equal to 90%, such as silver-copper alloy, silver-indium alloy, silver-aluminum alloy, etc. The thickness of the metal layer or the metal alloy layer is 5 nm to 20 nm. When the infrared reflective functional layer is a metal layer or a metal alloy layer, the weakening coating 5 is disposed on the second surface 12 or the third surface 31.

The infrared reflective functional layer may also be a transparent conductive oxide layer, the material of which may be at least one selected from the group consisting of indium tin oxide (ITO), NiCrOx, fluorine-doped tin oxide (FTO), ZnSnOx, and doped zinc oxide. The doping element in the doped zinc oxide may be at least one selected from the group consisting of aluminum, tungsten, hafnium, gallium, yttrium, niobium, and neodymium, such as aluminum-doped zinc oxide (AZO) or hafnium and aluminum-doped AZO (HAZO). In some embodiments, the thickness of the transparent conductive oxide layer is 50 nm to 300 nm. When the infrared reflective functional layer is a transparent conductive oxide layer, the weakening coating 5 is disposed on the second surface 12, the third surface 31, or the fourth surface 32.

In other embodiments, the weakening coating 5 includes at least one stacked structure of "high-refractive-index layer/low-refractive-index layer", where the high-refractive-index layer has a refractive index of not less than 1.8 and the low-refractive-index layer has a refractive index of not greater than 1.7. The weakening coating 5 is configured to reduce the visible light reflectivity of the windshield 200 or to increase the P-polarized light reflectivity thereof. Specifically, the weakening coating 5 may include 1 to 4 stacked structures. For example, the weakening coating 5 includes one stacked structure of high-refractive-index layer/low-refractive-index layer, where the high-refractive-index layer is directly disposed on the second surface 12, the third surface 31 or the fourth surface 32, and the low-refractive-index layer is disposed on the high-refractive-index layer. The weakening coating 5 may include two stacked structures of high-refractive-index layer/low-refractive-index layer, i.e., deposited sequentially outward as a first high-refractive-index layer, a first low-refractive-index layer, a second high-refractive-index layer and a second low-refractive-index layer, with the first high-refractive-index layer directly disposed on the second surface 12, the third surface 31 or the fourth surface 32. The weakening coating 5 may include three stacked structures of high-refractive-index layer/low-refractive-index layer, i.e., deposited sequentially outward as a first high-refractive-index layer, a first low-refractive-index layer, a second high-refractive-index layer, a second low-refractive-index layer, a third high-refractive-index layer and a third low-refractive-index layer, with the first high-refractive-index layer directly disposed on the second surface 12, the third surface 31 or the fourth surface 32.

The present disclosure further provides a method for manufacturing a windshield 200, including the following steps:

Step 1: providing a curved outer glass pane 1 and a curved inner glass pane 1, where the outer glass pane 1 has a first surface 11 and a second surface 12 opposite to each other, and the inner glass pane 3 has a third surface 31 and a fourth surface 32 opposite to each other;

Step 2: providing an interlayer 2, and laminating the outer glass pane 1, the interlayer 2 and the inner glass pane 3 in sequence to form a laminated glass structure; and

Step 3: heating, evacuating and/or pressurizing the laminated glass structure to obtain the windshield 200 which is provided with the first weakened zone 203.

In some embodiments, the windshield 200 further includes a second weakened zone 204.

The first weakened zone 203 and the second weakened zone 204 may each be formed by providing at least one weakening structure. Exemplarily, the weakening structure is disposed in the outer glass pane 1 and/or the inner glass pane 3, and is formed by at least one of the following weakening methods:

(i) introducing internal defects between the first surface 11 and the second surface 12 using a laser weakening method;

(ii) introducing internal defects between the third surface 31 and the fourth surface 32 using a laser weakening method;

(iii) forming micro-cracks on the second surface 12 using a physical friction weakening method; or

(iv) forming fracture patterns on the second surface 12 using a chemical etching weakening method.

In the present disclosure, the weakening structure may be disposed only within the first weakened zone 203, or a plurality of weakening structures may be disposed in the first weakened zone 203 and the second weakened zone 204 respectively. The weakening structure within the first weakened zone 203 may be the same as or different from that within the second weakened zone 204.

In some embodiments, the curved outer glass pane 1 and the curved inner glass pane 3 are obtained by subjecting flat glass to a heating and softening step, a bending and shaping step and an annealing step. By setting different process conditions for these steps, it is possible to further adjust the stress of the outer glass pane 1 and the inner glass pane 3, thereby further adjusting the HIC of the windshield 200. The heating and softening step involves using a heating element to raise the temperature of the flat glass to its softening temperature. The bending and shaping involves using a bending mold to bend and shape the flat glass, where the bending mold may be at least one selected from the group consisting of a solid male mold, a solid female mold, an annular male mold and an annular female mold. The annealing step involves using a blowing device to cool the curved outer glass pane 1 and the curved inner glass pane 3 to room temperature. Exemplarily, in the present disclosure, the heating and softening step, the bending and shaping step, and the annealing step satisfy at least one of the following conditions:

(i) the heating and softening step adopts a heating temperature of 660 °C to 750 °C;

(ii) the heating and softening step adopts a convection heating method to soften the flat glass;

(iii) the heating and softening step adopts a convection heating method and a radiation heating method to soften the flat glass;

(iv) in the heating and softening step, a surface of the flat glass with a lower concentration of tin oxide faces a heating element;

(v) in the heating and softening step, the heating and softening time for the outer glass pane 1 is longer than that for the inner glass pane 3;

(vi) in the bending and shaping step, a temperature of a bending mold for bending and shaping the flat glass is greater than or equal to 500 °C;

(vii) in the annealing step, an air blowing pressure for the outer glass pane 1 is lower than that for the inner glass pane 3; and

(viii) in the annealing step, an annealing time for the outer glass pane 1 is longer than that of the inner glass pane 3.

In some embodiments, before the laminated glass structure is formed, the interlayer 2 is subjected to a humidity conditioning treatment or a stretching treatment. The interlayer 2 that has subjected to the humidity conditioning treatment has a moisture content of 0.3% to 0.4% or 0.6% to 0.7%, and the interlayer 2 that has subjected to the stretching treatment has a thickness of 0.38 mm to 0.6 mm in the first weakened zone 203.

Examples 1 to 20 and Comparative Examples 1 to 10

A plurality of pieces of float glass with a thickness of 2.1 mm are prepared and subjected to a heating and softening step, a bending and shaping step, and an annealing step to obtain curved outer glass panes 1 and curved inner glass panes 3. A polyvinyl butyral (PVB) film with a thickness of 0.76 mm is used as an interlayer 2, which is laminated with the curved outer glass pane 1 and the curved inner glass pane 3 to form a laminated glass structure in accordance with the manufacturing method of the present disclosure. The laminated glass structure is heated, evacuated and/or pressurized to obtain windshields 200 of Examples 1 to 20 and Comparative Examples 1 to 10. Among them, the windshields of Comparative Examples 1 to 5 are not subjected to weakening optimization and do not have a first weakened zone 203; the windshields of Comparative Examples 6 to 10 are subjected to weakening optimization and have the first weakened zone 203, but do not satisfy the requirements of $100 \leq HIC1 \leq 650$ and $HIC2 < 1000$; the windshields of Examples 1 to 20 are subjected to weakening optimization, have the first weakened zone 203, and satisfy the requirements of $100 \leq HIC1 \leq 650$ and $HIC2 < 1000$.

The windshields 200 of Examples 1 to 20 and Comparative Examples 1 to 10 are tested according to Chinese standard GB24550 using an adult headform impactor. The adult headform impactor impacts the first weakened zone 203 to fracture it, and subsequently impacts the instrument panel 100. An acceleration sensor and a data acquisition instrument are used to obtain impact curves of impact time versus resultant acceleration. The fracture phenomenon of the windshield 200 is observed or calculated. The test results are recorded in Table 1.

Atypical Fracture: exhibits at least one of phenomena (1) to (3):

(1) the windshield remains intact without fracturing for more than 1 ms when the adult headform impactor impacts the first weakened zone;

(2) during the interval from 0 to 5 ms in the impact curve, the first maximum resultant acceleration a5 is greater than 180 g; and

(3) during the interval from 0 to 15 ms in the impact curve, the average value of the maximum resultant acceleration of the resultant acceleration a that persists for a duration of 3 ms is greater than 50 g.

Typical Fracture: satisfies $100 \leq HIC1 \leq 650$ and $HIC2 < 1000$, and does not exhibit any atypical fracture phenomenon.

Table 1: Test Results of Windshields 200 of Examples 1 to 20 and Comparative Examples 1 to 10

| | HIC1 | First maximum resultant acceleration a5 | HIC2 | Average value of the maximum resultant acceleration persisted for 3 ms | Fracture phenomenon |
|---|---|---|---|---|---|
| Comparative Example 1 | 2070.7 | 255.2g | / | 147.2g | Unfractured |
| Comparative Example 2 | 1659.9 | 229.3g | 58.2 | 138.4g | Atypical fracture |
| Comparative Example 3 | 1316.2 | 208.2g | 60.7 | 129.6g | Atypical fracture |
| Comparative Example 4 | 1141.6 | 191.1g | 75.6 | 127.0g | Atypical fracture |
| Comparative Example 5 | 1010.4 | 182.4g | 88.3 | 115.4g | Atypical fracture |
| Comparative Example 6 | 963.1 | 180.5g | 91.9 | 113.7g | Atypical fracture |
| Comparative Example 7 | 855.5 | 175.6g | 99.8 | 93.4g | Atypical fracture |
| Comparative Example 8 | 777.4 | 172.9g | 107.7 | 75.3g | Atypical fracture |
| Comparative Example 9 | 691.4 | 176.1g | 113.7 | 73.1g | Atypical fracture |
| Comparative Example 10 | 90.8 | 49.8g | 1119.7 | 39.9g | Complete penetration |
| Example 1 | 156.4 | 80g | 617.6 | 40.7g | Typical fracture |
| Example 2 | 185.3 | 139.2g | 560.8 | 47.6 g | Typical fracture |
| Example 3 | 192.1 | 149.9g | 525.8 | 44.7 g | Typical fracture |
| Example 4 | 207.2 | 153.9g | 503.5 | 47.6 g | Typical fracture |
| Example 5 | 225.9 | 173.0g | 479.9 | 47.4 g | Typical fracture |
| Example 6 | 264.2 | 174.8g | 453.5 | 47.9g | Typical fracture |
| Example 7 | 281.7 | 172.0g | 406.1 | 45.0g | Typical fracture |
| Example 8 | 304.2 | 158.3g | 390.2 | 48.4g | Typical fracture |
| Example 9 | 321.0 | 175.3g | 347.1 | 45.5g | Typical fracture |
| Example 10 | 337.2 | 160.1g | 319.7 | 48.6g | Typical fracture |
| Example 11 | 372.1 | 176.7g | 288.6 | 42.6g | Typical fracture |
| Example 12 | 391.5 | 179.1g | 224.6 | 48.2g | Typical fracture |
| Example 13 | 420.8 | 176.3g | 210 | 40.2g | Typical fracture |
| Example 14 | 457.2 | 167.2g | 184.9 | 42.7g | Typical fracture |

(continued)

| | HIC1 | First maximum resultant acceleration a5 | HIC2 | Average value of the maximum resultant acceleration persisted for 3 ms | Fracture phenomenon |
|---|---|---|---|---|---|
| Example 15 | 473.3 | 172.0g | 179.4 | 45.0g | Typical fracture |
| Example 16 | 492.7 | 161.2g | 166.4 | 43.1g | Typical fracture |
| Example 17 | 501.0 | 169.7g | 156.4 | 46.0g | Typical fracture |
| Example 18 | 548.6 | 176.2g | 149.1 | 42.5g | Typical fracture |
| Example 19 | 586.0 | 174.4g | 138.6 | 45.4g | Typical fracture |
| Example 20 | 642.2 | 178.9g | 114.9 | 31.7g | Typical fracture |

As can be seen from Table 1, in Comparative Example 1, HIC1 is greater than 2000, the windshield 200 is not fractured during the test and no HIC2 is generated, yet it causes an extremely severe primary injury to the pedestrian's head. In each of Comparative Examples 2 to 6, HIC1 is greater than 900, the first maximum resultant acceleration a5 during the interval from 0 to 5 ms in the impact curve is greater than 180 g, and the average value of the maximum resultant acceleration of the resultant acceleration a that persists for a duration of 3 ms during the interval from 0 to 15 ms in the impact curve is greater than 100 g; the windshield 200 developed minor cracks during the test; although HIC2 is relatively small, it still causes a relatively severe primary injury to the pedestrian's head. In each of Comparative Examples 7 to 9, HIC1 is greater than 650, and the average value of the maximum resultant acceleration of the resultant acceleration a that persists for a duration of 3 ms during the interval from 0 to 15 ms in the impact curve is greater than 70 g; the windshield 200 developed minor cracks during the test, and HIC2 is still relatively small, but it causes a severe primary injury to the pedestrian's head. In Comparative Example 10, HIC1 is less than 100, the windshield 200 is completely penetrated during the test and HIC2 is greater than 1000; although the windshield 200 causes a minor primary injury to the pedestrian's head, the instrument panel inflicts an extremely severe secondary injury to the pedestrian's head.

In each of Examples 1 to 20, HIC1 satisfies 150≤HIC1≤650 and HIC2<650; during the interval from 0 to 5 ms in the impact curve, the first maximum resultant acceleration a5 is less than 180 g, and during the interval from 0 to 15 ms in the impact curve, the average value of the maximum resultant acceleration of the resultant acceleration a that persists for a duration of 3 ms is less than 50 g, which allows the outer glass pane 1 and the inner glass pane 3 of the windshield to fracture simultaneously or nearly simultaneously upon impact, with the specific fracture time shortened to within 3 ms, which is more conducive to reducing the primary injury inflicted by the windshield 200 on the pedestrian's head. The present disclosure not only meets the basic requirement of protecting the safety of occupants in the vehicle, but also reduces both the primary injury to the pedestrian's head caused by the windshield 200 and the secondary injury to the pedestrian's head caused by the instrument panel 100, thereby satisfying the standard requirement of HIC being less than 1000.

To be noted, in the description of the present disclosure, the terms "first", "second" and the like are used merely for the purpose of description and to distinguish similar objects, without indicating any precedence order therebetween, nor shall they be construed as indicating or implying relative importance. In addition, in the description of the present disclosure, unless otherwise specified, the term "a plurality of" means two or more.

Various embodiments described in the present disclosure are set forth in a progressive manner, and the same or similar parts of the embodiments may be referred to one another. Each embodiment focuses on the differences from other embodiments.

Those described above are merely several embodiments of the present disclosure. Although the embodiments disclosed in the present disclosure are as set forth above, the content is merely adopted for the convenience of understanding the present disclosure and shall not be construed as limiting the present disclosure. Any person skilled in the art to which the present disclosure pertains can make various modifications and variations in the form and details of the embodiments without departing from the spirit and scope disclosed in the present disclosure. However, the patent protection scope of the present disclosure shall still be subject to the scope defined by the appended claims.

## Claims

1. A windshield, which is mounted on a vehicle comprising an instrument panel, wherein the windshield comprises an outer glass pane, an interlayer, and an inner glass pane;

the outer glass pane comprises a first surface and a second surface opposite to each other, the inner glass pane comprises a third surface and a fourth surface opposite to each other, and the interlayer is connected between the second surface and the third surface;

the windshield has a first weakened zone, which is tested using an adult headform impactor, where the adult headform impactor impacts the first weakened zone to fracture it, and impacts the instrument panel thereafter;

the adult headform impactor exhibits a first head injury criterion (HIC1) during an interval from 0 to 5 ms after impacting the first weakened zone, where $100 \leq HIC1 \leq 650$; and

the adult headform impactor exhibits a second head injury criterion (HIC2) during an interval from 5 to 15 ms after impacting the first weakened zone, where $HIC2 < 1000$.

2. The windshield according to claim 1, wherein the adult headform impactor has a first maximum resultant acceleration (a5) during the interval from 0 to 5 ms after impacting the first weakened zone, and has a second maximum resultant acceleration (a15) during the interval from 5 to 15 ms after impacting the first weakened zone, where a5 is greater than a15.

3. The windshield according to claim 2, wherein a5 is less than or equal to 180 g, and a15 is less than or equal to 100 g.

4. The windshield according to claim 2, wherein a duration during which a resultant acceleration (a) of the adult headform impactor is continuously greater than 50 g during an interval from 0 to 15 ms after the adult headform impactor impacts the first weakened zone is less than or equal to 3 ms.

5. The windshield according to claim 1, wherein $HIC2 \leq 650$ and HIC2 is less than HIC1.

6. The windshield according to claim 1, wherein $200 \leq HIC1 \leq 500$ and $HIC2 \leq 500$.

7. The windshield according to claim 1, further comprising a second weakened zone, which is tested using the adult headform impactor, and the adult headform impactor exhibits a third head injury criterion (HIC3) during an interval from 0 to 15 ms after impacting the second weakened zone, where $HIC3 < 1000$.

8. The windshield according to claim 7, wherein $100 \leq HIC3 \leq 900$.

9. The windshield according to claim 7, wherein HIC3 is greater than HIC1 and $200 \leq HIC3 \leq 800$.

10. The windshield according to claim 7, further comprising a transparent zone and a shielding zone disposed around the transparent zone;

the transparent zone has a visible light transmittance of greater than or equal to 70%, and the shielding zone has a visible light transmittance of less than or equal to 10%; and

both the first weakened zone and the second weakened zone are located in the transparent zone.

11. The windshield according to claim 10, wherein the shielding zone comprises a top shielding zone, a left shielding zone, a bottom shielding zone and a right shielding zone;

a distance between a lower boundary of the first weakened zone and the bottom shielding zone is x, where x is less than or equal to 15 mm;

a distance between a left boundary of the first weakened zone and the left shielding zone is m, where m is less than or equal to 50 mm;

a distance between a right boundary of the first weakened zone and the right shielding zone is n, where n is less than or equal to 50 mm;

a distance between an upper boundary and the lower boundary of the first weakened zone is h, where h is 100 mm to 300 mm;

a distance between an upper boundary of the second weakened zone and the top shielding zone is y, where y is less than or equal to 100 mm;

a distance between a left boundary of the second weakened zone and the left shielding zone is equal to m, and a distance between a right boundary of the second weakened zone and the right shielding zone is equal to n.

12. The windshield according to claim 11, wherein a transition weakened zone is provided between a lower boundary of the second weakened zone and an upper boundary of the first weakened zone, and an area of the transition weakened zone is smaller than that of the first weakened zone;

the transition weakened zone is tested using the adult headform impactor, which exhibits a fourth head injury criterion (HIC4) during the interval from 0 to 15 ms after impacting the transition weakened zone, where HIC4 is greater than HIC1 and less than HIC3.

13. The windshield according to claim 10, wherein a ratio of an area of the first weakened zone to an area of the transparent zone is less than or equal to 1/3, a ratio of an area of the second weakened zone to an area of the transparent zone is less than or equal to 2/3, and the area of the first weakened zone is smaller than the area of the second weakened zone.

14. The windshield according to claim 1, wherein a duration required for the first weakened zone to fracture upon impact by the adult headform impactor is less than or equal to 3 ms.

15. The windshield according to any one of claims 1 to 14, wherein a flexural strength of the third surface is greater than that of the second surface, and/or a flexural strength of the fourth surface is greater than that of the second surface.

16. The windshield according to any one of claims 1 to 14, wherein a thickness of the interlayer located in the first weakened zone is 0.38 mm to 0.6 mm.

17. The windshield according to any one of claims 1 to 14, wherein the interlayer has a moisture content of 0.3% to 0.4% or 0.6% to 0.7%.

18. The windshield according to any one of claims 1 to 14, wherein a concentration of tin oxide of the second surface is greater than that of the first surface, and a concentration of tin oxide of the third surface is greater than that of the fourth surface; or

the concentration of tin oxide of the second surface is less than that of the first surface, and the concentration of tin oxide of the third surface is less than that of the fourth surface.

19. The windshield according to any one of claims 1 to 14, wherein a ratio of a thickness of the outer glass pane to a thickness of the inner glass pane is greater than or equal to 0.75 and less than 1.

20. The windshield according to any one of claims 1 to 14, wherein a weakening coating is disposed on at least one selected from the group consisting of the second surface, the third surface and the fourth surface, and the weakening coating covers at least the first weakened zone.

21. A vehicle, comprising an instrument panel and the windshield according to any one of claims 1 to 20, and the instrument panel is disposed at a position close to a lower side of the windshield.

22. A method for manufacturing the windshield according to any one of claims 1 to 20, comprising:

Step 1: providing a curved outer glass pane and a curved inner glass pane, wherein the outer glass pane has a first surface and a second surface opposite to each other, and the inner glass pane has a third surface and a fourth surface opposite to each other;

Step 2: providing an interlayer, and laminating the outer glass pane, the interlayer and the inner glass pane in sequence to form a laminated glass structure; and

Step 3: heating, evacuating and/or pressurizing the laminated glass structure to obtain the windshield which is provided with the first weakened zone.

23. The method of the windshield according to claim 22, wherein the windshield has at least one weakening structure which is located at least in the first weakened zone, and the weakening structure is formed by at least one of the following weakening methods:

(i) introducing internal defects between the first surface and the second surface using a laser weakening method;

(ii) introducing internal defects between the third surface and the fourth surface using a laser weakening method;

(iii) forming micro-cracks on the second surface using a physical friction weakening method; or

(iv) forming fracture patterns on the second surface using a chemical etching weakening method.

24. The method of the windshield according to claim 22, wherein the curved outer glass pane and the curved inner glass pane are obtained by subjecting flat glass to a heating and softening step, a bending and shaping step and an annealing step, which satisfy at least one of the following conditions:

(i) the heating and softening step adopts a heating temperature of 660 °C to 750 °C;
(ii) the heating and softening step adopts a convection heating method to soften the flat glass;
(iii) the heating and softening step adopts a convection heating method and a radiation heating method to soften the flat glass;
(iv) in the heating and softening step, a surface of the flat glass with a lower concentration of tin oxide faces a heating element;
(v) in the heating and softening step, a heating and softening time for the outer glass pane is longer than that for the inner glass pane;
(vi) in the bending and shaping step, a temperature of a bending mold for bending and shaping the flat glass is greater than or equal to 500 °C;
(vii) in the annealing step, an air blowing pressure for the outer glass pane is lower than that for the inner glass pane; and
(viii) in the annealing step, an annealing time for the outer glass pane is longer than that of the inner glass pane.

25. The method of the windshield according to claim 22, wherein before the laminated glass structure is formed, the interlayer is subjected to a humidity conditioning treatment or a stretching treatment; and

the interlayer that has subjected to the humidity conditioning treatment has a moisture content of 0.3% to 0.4% or 0.6% to 0.7%, and the interlayer that has subjected to the stretching treatment has a thickness of 0.38 mm to 0.6 mm in the first weakened zone.

FIG. 1

FIG. 2

FIG. 3

FIG. 4

FIG. 5

FIG. 6

FIG. 7

## INTERNATIONAL SEARCH REPORT

International application No.

**PCT/CN2024/126918**

### A. CLASSIFICATION OF SUBJECT MATTER

B60J1/02(2006.01)i; B32B17/10(2006.01)i; C03C27/12(2006.01)i

According to International Patent Classification (IPC) or to both national classification and IPC

### B. FIELDS SEARCHED

Minimum documentation searched (classification system followed by classification symbols)

IPC:B60J,B32B,C03C

Documentation searched other than minimum documentation to the extent that such documents are included in the fields searched

Electronic data base consulted during the international search (name of data base and, where practicable, search terms used)

CNABS, CNTXT, CNKI: 车辆, 挡风玻璃, 夹层, 弱化, 破裂, 断裂, HIC, 区域, 面积, 强度; VEN, WPABS, USTXT, EPTXT: vehicle, windshield, glass, laminated, weakening, HIC, area, strength.

### C. DOCUMENTS CONSIDERED TO BE RELEVANT

| Category* | Citation of document, with indication, where appropriate, of the relevant passages | Relevant to claim No. |
|---|---|---|
| PX | CN 117382388 A (FUYAO GLASS INDUSTRY GROUP CO., LTD.) 12 January 2024 (2024-01-12)<br>entire document | 1-25 |
| Y | CN 115448583 A (FUYAO GLASS INDUSTRY GROUP CO., LTD.) 09 December 2022 (2022-12-09)<br>description, paragraphs 54-173, and figures 1-10 | 1-11, 13-25 |
| Y | CN 116512705 A (ANHUI WANWEI UPDATED HIGH-TECH MATERIAL INDUSTRY CO., LTD.) 01 August 2023 (2023-08-01)<br>description, paragraphs 36-115, and figures 1-6 | 1-11, 13-25 |
| Y | CN 116615348 A (SAINT-GOBAIN GLASS FRANCE) 18 August 2023 (2023-08-18)<br>description, paragraphs 57-61, and figures 1-5 | 7-11, 13, 15-25 |
| A | WO 2019245819 A1 (CORNING INC.) 26 December 2019 (2019-12-26)<br>entire document | 1-25 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **14 January 2025** | **23 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/126918**

| Patent document cited in search report | | | Publication date (day/month/year) | Patent family member(s) | | | Publication date (day/month/year) |
|---|---|---|---|---|---|---|---|
| CN | 117382388 | A | 12 January 2024 | None | | | |
| CN | 115448583 | A | 09 December 2022 | CN | 115448583 | B | 23 January 2024 |
| CN | 116512705 | A | 01 August 2023 | None | | | |
| CN | 116615348 | A | 18 August 2023 | EP | 4448272 | A1 | 23 October 2024 |
| | | | | WO | 2023110546 | A1 | 22 June 2023 |
| WO | 2019245819 | A1 | 26 December 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311379454X

**Non-patent literature cited in the description**

- GB 24550
- *GB 24550*
- *GB 9656*
- *GB24550*